(19) Europäisches Patentamt
European Patent Office
Office européen des brevets

(11) Veröffentlichungsnummer: **0 455 872 A1**

# (12) EUROPÄISCHE PATENTANMELDUNG

(21) Anmeldenummer: **90123929.3**

(22) Anmeldetag: **12.12.90**

(51) Int. Cl.5: **C08K 5/38**, C08L 21/02

(30) Priorität: **08.05.90 DE 4014627**

(43) Veröffentlichungstag der Anmeldung:
**13.11.91 Patentblatt 91/46**

(84) Benannte Vertragsstaaten:
**AT BE CH DE ES FR GB IT LI LU NL SE**

(71) Anmelder: **HÜLS AKTIENGESELLSCHAFT**
**Patentabteilung / PB 15 - Postfach 13 20**
**W-4370 Marl 1(DE)**

(72) Erfinder: **Knipp, Herbert**
**Stockwieser Kamp 20**
**W-4358 Haltern 5(DE)**
Erfinder: **Hörpel, Gerhard, Dr.**
**Lerchenhain 84**
**W-4405 Nottuln(DE)**

## (54) Verfahren zur Vulkanisation von wässrigen Dispersionen ungesättigter Polymere mit einem Vulkanisiersystem auf der Basis von Schwefel und Dithiocarbonsäuren bzw. deren Salzen.

(57) Ziel der Erfindung war es, ein Verfahren zur Vulkanisation von wäßrigen Dispersionen ungesättigter Polymerer aufzufinden, das einerseits das Entstehen gesundheitsgefährdender Nitrosamine ausschließt und andererseits gleichzeitig die Vulkanisationseigenschaften nicht beeinträchtigt.

Die Lösung besteht darin, daß man der Vulkanisationsmischung eine wirksame Menge einer aromatischen Hydroxydithiocarbonsäure bzw. deren Salz zusetzt.

Das erfindungsgemäße Verfahren eignet sich sowohl für Naturkautschuk als auch für Synthesekautschuk.

EP 0 455 872 A1

Die Erfindung betrifft ein Verfahren Zur Vulkanisation von wäßrigen Dispersionen ungesättigter Polymerer mit einem Vulkanisationssystem auf der Basis Schwefel und neuen Vulkanisationsbeschleunigern, bestehend aus Dithiocarbonsäuren bzw. deren Salzen, gegebenenfalls in Gegenwart weiterer üblicher Zuschlagstoffe. Das erfindungsgemäße Verfahren erlaubt die Herstellung von Vulkanisaten, unter Vermeidung von Nitrosaminen, die nach heutiger Erkenntnis als Gesundheitsrisiko angesehen werden.

Sowohl die neue Gefahrstoffverordnung als auch die neue TRGS 522 (Technische Regeln für Gefahrstoffe) "Nitrosamine" stellt die Gummiindustrie - hier: Hersteller und Verarbeiter - vor die Aufgabe, Nitrosaminkonzentrationen zu reduzieren. Einigkeit besteht darin, daß dies nur über die Vermeidung potentieller Nitrosaminquellen zu schaffen ist. Potentielle Nitrosaminquellen sind jedoch u. a. die wichtigsten gebräuchlichen Vulkanisationsbeschleuniger (siehe hierzu: Kautschuk und Gummi - Kunststoffe 42, 1/89, Seite 16 ff.).

Die Vulkanisation von Latexartikeln, wie z. B. Matratzen, Gummihaarpolstern, Schuheinbauteilen oder Teppichrückenseitenbeschichtungen, erfolgt wegen der Anwesenheit von Wasser überwiegend bei Temperaturen ≦ 100 °C. Zur Erzielung ausreichender Vernetzungsdichte und hoher Vulkanisationsgeschwindigkeit wird mit Beschleunigerkombinationen gearbeitet, die fast immer Zinkdialkyldithiocarbamate enthalten. Im Verlaufe des Vulkanisationsprozesses zerfallen diese u. a. zu Aminen, die ihrerseits mit dem ubiquitär vorhandenen $(NO)_x$ zu Nitrosaminen reagieren (zum Mechanismus siehe o. a. Literatur). Diese Nitrosamine, die nach heutiger Erkenntnis als Gesundheitsrisiko angesehen werden müssen (vgl. Umschau 1985 (1), 24), lassen sich in der Umgebungsluft der Produktionsanlagen nachweisen.

Stickstofffreie Vulkanisationsbeschleuniger sind z. B. in Form der Xanthogenate und Dithiophosphate bekannt. Sie sind jedoch bei den niedrigen Vulkanisationstemperaturen nicht wirkungsvoll und sind deshalb nicht im Einsatz. Es ist bekannt, Festkautschuk mit aromatischen Hydroxydithiocarbonsäuren bzw. deren Salzen zu vulkanisieren. Dabei erfolgt aber die Vulkanisation bei Temperaturen ≧ 100 °C, bevorzugt zwischen 120 und 240 °C (Patentanmeldung P 39 41 001.3).

Ziel der vorliegenden Erfindung war es somit, ein Verfahren zur Vulkanisation von wäßrigen Polymerdispersionen aufzufinden, das einerseits das Entstehen gesundheitsgefährdender Nitrosamine ausschließt und gleichzeitig die Vulkanisationsgeschwindigkeit bei ca. 100 °C, bevorzugt unter 100 °C, und die Vulkanisationseigenschaften nicht beeinträchtigt.

Es wurde jetzt ein solches Verfahren gefunden. Dieses besteht darin, daß man der Vulkanisationsmischung eine wirksame Menge einer aromatischen Hydroxydithiocarbonsäure bzw. deren Salz der allgemeinen Formel

B - A zusetzt,

wobei B die Bedeutung von

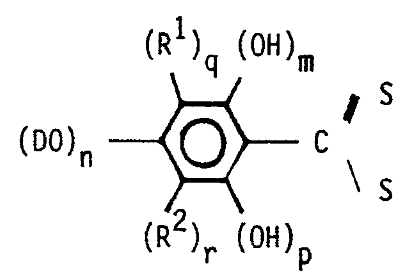

haben soll. n, m, p, q und r haben die Bedeutung von 0 oder 1 mit der Einschränkung, daß die Summe n + m + p mindestens den Wert 1 haben muß.

$R^1$ und $R^2$ sind gleiche oder unterschiedliche Reste folgender Bedeutung

- Alkylrest mit 1 bis 10 C-Atomen
- Alkylenrest mit 1 bis 10 C-Atomen
- Aralkylrest mit bis zu 15 C-Atomen.

D hat die Bedeutung von Wasserstoff- oder Ammonium- oder ein- und zweiwertigen Metallionen, vorzugsweise Na, K und Zn.

A hat die Bedeutung von B oder Wasserstoff- oder Ammonium- oder ein- und zweiwertigen Metallionen, vorzugsweise Na, K und Zn.

Die erfindungsgemäßen Produkte sollten die Stabilität der Polymerdispersionen und deren Gelierverhalten möglichst nicht beeinflussen. Dieses ist normalerweise gegeben, wenn die Produkte eine geringe Wasserlöslichkeit besitzen.

Die Darstellung der erfindungsgemäß verwendeten Dithiocarbonsäuren und ihrer Salze erfolgt üblicherweise durch Dithiocarboxylierung der entsprechenden Phenole in Dimethylformamid oder in Alkoholen. Ein geeignetes Dithiocarboxylierungsmittel ist ein Gemisch aus Schwefelkohlenstoff und Kaliumhydroxid, ferner Kaliumdithiocarbonat oder Kaliumtrithiocarbonat (siehe Scheithauer, R. Mayer, in A. Senning: Topics in Sulfur Chemistry, Thio- and Dithiocarboxylic Acids and their Derivates, Vol. 4, Georg Thieme Verlag, Stuttgart, 1979).

Für die Anwendung kommen Natur- und Syntheselatices in Frage. Syntheselatices sind im erfindungsgemäßen Sinne wäßrige Dispersionen von ungesättigten Polymeren, wie z. B. Butadien-Styrol-Copolymere mit und ohne Verstärkerteil (Polystyrol oder hochstyrolhaltige SB-polymerisate), Polybutadien, Polyisopren oder Acrylnitril-Butadien-Copolymerisate u. a. (siehe Blackley, D. C.: high polymer latices, Vol. 1).

Die Herstellung der Vulkanisiermittel-Dispersion und die Verarbeitung erfolgen in der für den Artikel üblichen Form. Bezüglich der Zusatzstoffe und Verarbeitungshilfsmittel, wie Beschleuniger, Aktivatoren, Ozon- und Alterungsschutzmittel, Gelier- und Verdickungsmittel, bestehen keine besonderen Anforderungen.

Die Vulkanisation erfolgt in direkt beheizten drucklosen Formen oder in Durchlaufaggregaten mit Dampf, Heißluft oder Hochfrequenzenergie bei Temperaturen ≦ 100 °C. Latexartikel, wie z. B. Gummihaarpolster oder Teppiche mit Latexschaumbeschichtungen, bei denen mit der Vulkanisation gleichzeitig eine Trocknung erfolgt, können nach dem Trocknen auch auf höhere Temperaturen erhitzt werden.

## Experimenteller Teil

Der technische Fortschritt, der mit den erfindungsgemäß verwendeten Substanzen zu erzielen ist, soll am Beispiel des Zinksalzes der 3,5-Di-t-butyl-4-hydroxybenzol-dithiocarbonsäure (DBCS-Zn) bei der Herstellung eines Latexschaum-Formteils und seiner Eigenschaften erläutert werden. Als Vergleichsprodukt wird das z. Z. noch überwiegend verwendete Zinkdiethyldithiocarbamat (ZDEC) eingesetzt. Die Dosierung entspricht beim ZDEC der praxisüblichen Einsatzmenge, beim DBCS-Zn ist zur Erzielung gleicher Vulkanisationsgeschwindigkeit eine höhere Dosierung erforderlich.

### Herstellung der Formteile

Die Herstellung erfolgt in einer Aluminiumform (30 x 30 x 3 $cm^3$) nach dem Dunlop-Verfahren (siehe Reinhard, H.: Dispersionen synthetischer Hochpolymerer, Kap. 15). Verarbeitung und Grundrezeptur sind in der Produktinformation BUNATEX SL 3510, 4447/08.87, beschrieben. Die Vulkanisationszeit im entspannten Dampf (≈ 100 °C) beträgt 30 Minuten (praxisüblicher Wert für 30 mm Vollplatte). Die Formteile werden in einer Zentrifuge mit Wasser gewaschen und 16 Stunden bei 105 °C in Heißluft getrocknet. Bei den Beispielen 3 und 4 wird die Vulkanisationsmittel-Dispersion erst nach der Verschäumung zugesetzt, um eine Reaktion zwischen Zinkoxid und dem Ammoniak des Naturlatex und eine dadurch mögliche Koagulation des Latex zu vermeiden. Die Gelierung des Schaumes erfolgt bei den Beispielen 1 und 2 während der Aufheizung zur Vulkanisation, bei den Beispielen 3 und 4 wie üblich bei Raumtemperatur (22 °C).

Eigenschaften des Latex-Schaumstoffs (Raumgewicht = 100 g/l)

| Beispiel | SBR-Latex 1 | SBR-Latex 2 | Naturlatex 3 | Naturlatex 4 |
|---|---|---|---|---|
| Beschleuniger-Typ | ZDEC | DBCS-Zn | ZDEC | DBCS-Zn |
| Dosierung (TL/100 TS) | 1 | 3 | 1 | 3 |
| Vulkanisationsgeschw. (min) Hüls-Methode* | 9,5 | 9,5 | 9,0 | 8,5 |
| Eindrückhärte (N) DIN 53 756, B-Stempel | 135 | 135 | 95 | 115 |
| Zugfestigkeit (MPa) DIN 53 571-A | 0,08 | 0,08 | 0,120 | 0,130 |
| Bruchdehnung (%) | 150 | 190 | 315 | 320 |
| Druck-Verformungsrest (%) DIN 53 572, 22 h/70 °C | 13,2 | 12,7 | 5,7 | 4,6 |

SBR-Latex: BUNATEX SL 3510

Naturlatex: Zentrifugenlatex KAGETEX LA TC, Kautschukgesellschaft mbH, Frankfurt

ZDEC: Zinkdiethyldithiocarbamat

DBCS-Zn: Zinksalz der 3,5-Di-t-butyl-4-hydroxybenzol-dithiocarbonsäure

TL/100 TS: Gewichtsteile pro 100 Gewichtsteile Latextrockensubstanz

* Prüfgerät nach DBP 28 35 038, Temperatur = 100 °C

## Patentansprüche

1. Verfahren zur Vulkanisation von wäßrigen Dispersionen ungesättigter Polymere mit einem Vulkanisiersystem und üblichen Zusätzen,
dadurch gekennzeichnet,
daß als Vulkanisiersystem Schwefel und eine aromatische Hydroxydithiocarbonsäure bzw. deren Salz der allgemeinen Formel

   B - A eingesetzt wird,

wobei B die Bedeutung von

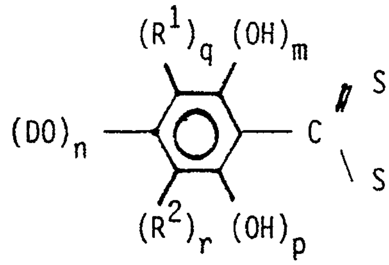

haben soll, n, m, p, q und r haben die Bedeutung von 0 oder 1 mit der Einschränkung, daß die Summe n + m + p mindestens den Wert 1 haben muß,
$R^1$ und $R^2$ gleiche oder unterschiedliche Reste folgender Bedeutung sind

- Alkylrest mit 1 bis 10 C-Atomen
- Alkylenrest mit 1 bis 10 C-Atomen
- Aralkylrest mit bis zu 15 C-Atomen,

D die Bedeutung von Wasserstoff- oder Ammonium- oder ein- und zweiwertigen Metallionen, vorzugsweise Na, K und Zn, und A die Bedeutung von B oder Wasserstoff- oder·Ammonium- oder ein- und zweiwertigen Metallionen, vorzugsweise Na, K und Zn, hat.

**2.** Verfahren nach Anspruch 1,
dadurch gekennzeichnet,
daß die aromatische Hydroxydithiocarbonsäure bzw. deren Salz in einer Menge von 0,1 bis 5,0 phr eingesetzt wird.

**3.** Verfahren nach Anspruch 1,
dadurch gekennzeichnet,
daß die Wasserlöslichkeit der Hydroxydithiocarbonsäure bzw. deren Salz < 1 % beträgt.

**4.** Verfahren nach Anspruch 1,
dadurch gekennzeichnet,
daß die Wasserlöslichkeit < 0,1 % beträgt.

**5.** Verfahren nach Anspruch 1,
dadurch gekennzeichnet,
daß das Zinksalz der 3,5-Di-t-butyl-4-hydroxybenzol-dithiocarbonsäure verwendet wird.

Europäisches Patentamt

# EUROPÄISCHER RECHERCHENBERICHT

Nummer der Anmeldung

**EP 90 12 3929**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | BE-A-5 892 49 (BAYER AG)<br>* Seite 8, Zeilen 22-27 *<br>- - - - - | | C 08 K 5/38<br>C 08 L 21/02 |

| RECHERCHIERTE SACHGEBIETE (Int. Cl.5) |
|---|
| C 08 K<br>C 07 C<br>C 08 J<br>C 08 L |

Der vorliegende Recherchenbericht wurde für alle Patentansprüche erstellt

| Recherchenort | Abschlußdatum der Recherche | Prüfer |
|---|---|---|
| Den Haag | 08 August 91 | METTLER R.M. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument